# EUROPÄISCHE PATENTSCHRIFT

(11) **EP 3 868 929 B1**
(45) Veröffentlichungstag und Bekanntmachung des Hinweises auf die Patenterteilung: **23.04.2025**
(21) Anmeldenummer: 21161705.5
(22) Anmeldetag: 15.01.2018
(51) Int. Cl.: D01F 2/00, C08B 16/00, C08J 11/06, D01F 1/02

(54) **FORMKÖRPER DER IN CELLULOSE INKORPORIERTES ELASTAN AUFWEIST UND HERSTELLUNGSVERFAHREN**
MOULDED ARTICLE COMPRISING CELLULOSE INCORPORATED INTO ELASTANE AND METHOD OF MANUFACTURING
CORPS MOULÉ, COMPORTANT DE L'ÉLASTANE INCORPORÉ DANS LA CELLULOSE ET PROCÉDÉ DE FABRICATION

(43) Veröffentlichungstag der Anmeldung: 25.08.2021
(62) Teilanmeldung aus: 18151674.1
(73) Patentinhaber: LENZING AKTIENGESELLSCHAFT, 4860 Lenzing (AT)
(72) Erfinder: Weilach, Christian, 4840 Vöcklabruck (AT); Herchl, Richard, 4910 Ried im Innkreis (AT); Klaus-Nietrost, Christoph, 4840 Vöcklabruck (AT)
(74) Vertreter: Global Patent Management Lenzing AG

(56) Entgegenhaltungen:
- WO-A1-2015/049040
- CN-A- 102 154 722

## Beschreibung

Die Erfindung betrifft einen regenerierten cellulosischen Formkörper sowie ein Verfahren zum Herstellen des Formkörpers.

Die Erfindung bezieht sich auf das technische Gebiet des Wiederverwendens (Recycling), insbesondere des Wiederverwendens von Ausgangsstoffen, welche Cellulose aufweisen. Weiter insbesondere betrifft die Erfindung ein Wiederverwenden von diesen Ausgangsstoffen zum Herstellen eines Formkörpers, welcher ebenfalls Cellulose enthält, insbesondere wobei die Cellulose des Formkörpers im Wesentlichen in Form von Lyocellfasern und/oder Viskosefasern vorliegt.

Als Viskosefasern werden Chemiefasern bzw. Regeneratfasern bezeichnet, die mittels eines Viskoseverfahren genannten Nassspinnverfahrens hergestellt werden. Der Ausgangsrohstoff des Viskoseverfahrens ist Cellulose, die auf der Basis von Holz bereitgestellt wird. Aus diesem Ausgangsrohstoff Holz wird die hochreine Cellulose in Form von Chemiezellstoff gewonnen. In aufeinanderfolgenden Prozessstufen wird der Zellstoff zuerst mit Natronlauge behandelt, wodurch sich Alkalicellulose bildet. Bei einer anschließenden Umsetzung dieser Alkalicellulose mit Schwefelkohlenstoff bildet sich Cellulose-Xanthogenat. Daraus wird durch weitere Zugabe von Natronlauge die Viskose-Spinnlösung erzeugt, die durch Löcher brausenartiger Spinndüsen in ein Spinnbad gepumpt wird. Dort entsteht durch Koagulation pro Spinndüsenloch ein Viskose-Filament. Die so hergestellten Viskose-Filamente werden im Anschluss zu Viskose-Stapelfasern geschnitten.

Lyocell bezeichnet eine Cellulose aufweisende Regeneratfasergattung, die nach einem Direkt-Lösemittelverfahren hergestellt wird. Die Cellulose wird für das Lyocell-Verfahren aus dem Rohstoff Holz extrahiert. Der so gewonnene Zellstoff kann anschließend in N-Methylmorpholin-N-oxid (NMMO), einem Lösungsmittel, durch Wasserentzug ohne chemische Modifizierung gelöst, filtriert und anschließend durch Spinndüsen gepresst werden. Die so geformten Filamente werden nach Passieren eines Luftspaltes in einem Bad mit wässriger NMMO-Lösung ausgefällt, und anschließend zu Stapelfasern geschnitten.

Bei der Verwendung von Materialien als Rohstoffe für die Gewinnung von Cellulose stellt sich häufig das Problem der Reinheit dieser Ausgangsstoffe. Die Ausgangsstoffe sind häufig mit nicht holztypischen Materialien verunreinigt. Insbesondere sind z.B. heutige Alttextilien (Altkleider und/oder Reste aus der Kleidungsherstellung) stark mit synthetischen Kunststoffen belastet. Einerseits, weil Sie zu großen Teilen aus Kunststoffen bestehen. Andererseits aber, weil heutzutage auch viele vorwiegend aus Naturfasern bestehenden Alttextilien zumindest teilweise mit Kunststoffanteilen belastet sind. Bei der Aufbereitung dieser Recyclingmaterialien (Textilrecycling) fallen bei der Schließung eines Stoffkreislaufes verschiedene unerwünschte Fremdstoffe wie die erwähnten synthetischen Kunststoffe an, welche bei der Herstellung einer Faser entfernt werden müssen, damit die technisch/physikalischen Eigenschaften gegenüber einer nicht nichtrecycelten Faser genügend ähnlich werden. Normalerweise werden solche Fremdstoffe, insbesondere Polyurethane, möglichst vollständig beseitigt. Um möglichst reine Cellulose zu gewinnen, ist also ein Abreichern dieser synthetischen Kunststoffe notwendig. Hierbei ist jedoch insbesondere die Abreicherung von Polyurethanen (z.B. Elastane aus elastischer Sportkleidung) besonders aufwändig.

Ein weiteres Problem bei der Verwendung von recycelten Materialien wie Alttextilien besteht in Hinblick auf ein Lyocell- und/oder Viskose-Verfahren darin, dass die aus Alttextilien zurückgewonnenen Cellulosen typischerweise relativ kurze Kettenlängen aufweisen. Die recycelten Fasern weisen dann andere Eigenschaften als nicht-recycelte Fasern auf, was im Normalfall nicht erwünscht ist.

WO 2015/049040 A1 offenbart die Herstellung einer Lyocell-Spinnlösung wobei der Spinnlösung thermoplastische Elastomere (TPE) zugesetzt werden können, um sogenannte Hybridfasern herzustellen.

Es ist eine Aufgabe der vorliegenden Erfindung, in ressourcensparender und nachhaltiger Weise Celluloseprodukte mit spezifischen Eigenschaften herzustellen.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Aspekt der vorliegenden Erfindung ist ein regenerierter cellulosischer Formkörper geschaffen, welcher in der Cellulose inkorporiertes Elastan aufweist, und welcher nach einem Lyocell-Verfahren oder einem Viskose-Verfahren hergestellt ist.

Gemäß einem weiteren Aspekt der vorliegenden Erfindung ist ein Verfahren zum Herstellen eines Cellulose aufweisenden Formkörpers geschaffen, wobei das Verfahren aufweist: i) Bereitstellen eines Ausgangsstoffs, welcher Cellulose und Elastan aufweist, insbesondere wobei das Elastan in dem Ausgangsstoff separat von der Cellulose vorliegt, wobei der Ausgangsstoff ein Festkörper ist, und ii) Erzeugen des Cellulose aufweisenden Formkörpers, insbesondere mittels eines Lyocell-Verfahrens oder eines Viskose-Verfahrens, auf Basis des Ausgangsstoffs derart, dass der regenerierte cellulosische Formkörper zumindest einen Teil des Elastans des Ausgangsstoffs in der Cellulose inkorporiert aufweist. Hierbei ist der Teil des Elastans des Ausgangsstoffs in dem regenerierten cellulosischen Formkörper inkorporiert.

Im Rahmen dieser Anmeldung kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d.h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden, zum Beispiel als reißfeste Fasern.

Im Rahmen dieser Anmeldung kann unter dem Begriff "Formkörper" insbesondere ein zwei- oder dreidimensionaler geometrischer Körper verstanden werden, der ein Resultat eines Verfahrens zum Herstellen bzw. Wiedergewinnen von Cellulose ist. Insbesondere kann unter einem Formkörper ein zwei- oder dreidimensionales Objekt verstanden werden, das Cellulose aufweist oder daraus besteht und aus gelöstem Zellstoff hergestellt wird. Formkörper können insbesondere Lyocell-Formkörper, Viskose-Formkörper oder Modal-Formkörper sein. Typische Formkörper sind Filamente, Fasern, Schwämme und/oder Filme. Grundsätzlich eignen sich alle Arten von Celluloseformkörpern für Ausführungsbeispiele der Erfindung. Dabei sind als Fasern sowohl Endlosfilamente als auch geschnittene Stapelfasern mit herkömmlichen Abmessungen (zum Beispiel 38 mm Länge) und Kurzfasern zu verstehen. Zur Herstellung von Fasern kommen dabei sowohl Verfahren mit Abzugseinrichtungen nach einer oder mehreren Extrusionsdüsen als auch andere Verfahren, wie insbesondere Melt-Blowing-Verfahren, in Frage. Alternativ zu Fasern kann als Formkörper auch eine Cellulose aufweisende Folie hergestellt werden, d.h. ein flächiger und im Wesentlichen homogener Film mit oder aus Cellulose. Folien können insbesondere dadurch hergestellt werden, dass durch Einstellung der Prozessparameter eines Lyocell-Verfahrens ein Koagulieren zumindest teilweise erst nach Auftreffen der Filamente auf einer Aufnahmefläche ausgelöst wird. Unter Folien können flächige Celluloseformkörper verstanden werden, wobei die Dicke dieser Folien einstellbar ist (zum Beispiel durch Auswahl einer Anzahl seriell angeordneter Düsenbalken). Andere Ausführungsformen eines Formkörpers sind ein Gewebe und ein Vlies aus Cellulosefilamenten bzw. aus Cellulosefasern, insbesondere ein Spinnvlies aus integral miteinander verschmolzenen ("merging") im Wesentlichen kontinuierlichen Cellulosefilamenten ("melt blown"). Hierbei kann unter einem Gewebe insbesondere ein textiles Flächengebilde aus mindestens zwei (vorzugsweise rechtwinklig oder nahezu rechtwinklig) verkreuzten Fadensystemen (oder Fasersystemen) verstanden werden, wobei Fäden (oder Fasern) in Längsrichtung als Kettfäden und Fäden (oder Fasern) in Querrichtung als Schussfäden bezeichnet werden können. Ein Vlies oder Nonwoven kann als ungeordnetes (insbesondere in Wirrlage vorliegendes) Gebilde aus Filamenten oder Fasern oder geschnittenen Garnen begrenzter Länge bezeichnet werden, die zu einer Faserschicht oder einem Faserflor zusammengefügt und (insbesondere reibschlüssig) miteinander verbunden sind. Ein Formkörper kann auch in der Gestalt einer Kugel geschaffen werden. Als Formkörper können auch Cellulose aufweisende Partikel, wie insbesondere Beads (d.h. ein Granulat bzw. Kügelchen) oder Flakes, bereitgestellt werden, die in dieser Form weiterverarbeitet werden können. Mögliche Celluloseformkörper sind also auch partikuläre Strukturen wie Granulat, sphärische Pulver oder Fibride. Eine Formgebung eines Formkörpers erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Ein weiterer möglicher Celluloseformkörper ist ein Schwamm oder allgemeiner ein poröser Formkörper. Die genannten Formkörper können gemäß exemplarischen Ausführungsbeispielen zum Beispiel zur Herstellung von Garnen, Textilien, Gelen oder Verbundwerkstoffen verwendet werden.

Im Rahmen dieser Anmeldung kann unter dem Begriff "Cellulosequelle" insbesondere ein Medium (insbesondere ein Festkörpermedium) verstanden werden, das als Basis zum Herstellen eines Cellulose aufweisenden Formkörpers während eines entsprechenden Herstellungsverfahrens das hierfür verwendete Cellulosematerial bereitstellt. Ein Beispiel ist Holz bzw. Holzzellstoff.

Im Rahmen dieser Anmeldung kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihres freien oder gesteuerten Fallens durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Im Rahmen dieser Anmeldung kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz oder ein Holzzellstoff) gewonnen werden, der diese Cellulose enthält. In aufeinanderfolgenden Prozessstufen kann bei dem Viskoseverfahren der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente.

Im Rahmen dieser Anmeldung kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieser Anmeldung können unter dem Begriff "Altkleider" insbesondere Cellulose aufweisende Kleidungsstücke verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Im Rahmen dieser Anmeldung kann unter dem Begriff "synthetischer Kunststoff" insbesondere ein Stoff verstanden werden, welcher aus Makromolekülen aufgebaut ist und synthetisch hergestellt wird. Die jeweiligen Makromoleküle eines Kunststoffes sind Polymere und daher aus wiederholenden Grundeinheiten (Wiederholeinheiten) aufgebaut. Die Größe der Makromoleküle eines Polymers kann zwischen einigen tausend bis über eine Million Grundeinheiten variieren. Beispielsweise besteht das Polymer Polyethylen (PE) aus aneinander verbundenen, sich vielfach wiederholenden Ethyleneinheiten. Hierbei können die Polymere unverzweigte, verzweigte oder vernetzte Moleküle sein. Kunststoffe können bezüglich ihrer physikalischen Eigenschaften im Prinzip in drei Gruppen unterteilt werden: Thermoplaste, Duroplaste und Elastomere. Ferner können diese Eigenschaften auch in Untergruppen kombiniert sein, z.B. bei thermoplastischen Elastomeren. Wichtige Merkmale von Kunststoffen sind ihre technischen Eigenschaften, wie Formbarkeit, Härte, Elastizität, Bruchfestigkeit, Temperatur-, Wärmeformbeständigkeit und chemische Beständigkeit, die sich durch die Wahl der Makromoleküle, Herstellungsverfahren und in der Regel durch Beimischung von Additiven in weiten Grenzen variieren lassen. Typische Reaktionen zum Herstellen von synthetischem Kunststoff aus Monomeren oder Pre-Polymeren sind: Kettenpolymerisation, Polyaddition oder Polykondensation.

Beispiele für synthetische Kunststoffe, welche insbesondere auch in Textilien verwendet werden, sind z.B. Polyurethan (PUR), insbesondere in Elastan, Polyester (PE, z.B. Polyethylenterephthalat (PET)), Polyamid (PA, z.B. Nylon, Perlon) und Polyether, insbesondere Polyethylenglykol (PEG) als Bestandteil von Elastan.

Im Rahmen dieser Anmeldung kann unter dem Begriff "Elastan" insbesondere ein synthetischer Kunststoff verstanden werden, welcher thermoplastische und elastische Eigenschaften aufweist. Elastan kann daher als thermoplastisches Elastomer (TPE) bezeichnet werden. Elastan kann als Block-Copolymer vorliegen, welches insbesondere durch die folgenden beiden Blöcke gekennzeichnet ist: Polyurethan (PUR) und Polyethylenglycolether (PEG). Hierbei können die PUR Segmente steife Abschnitte bilden, welche sich mit weichen, elastischen (PEG) Abschnitten abwechseln. PUR kann steife, gestreckte Abschnitte bilden, die sich längs zueinander anlagern und durch den Aufbau von Nebenvalenzkräften den Zusammenhalt z.B. einer Faser ermöglichen. Die gummiartigen PEG Blöcke (z.B. jeweils etwa 40 bis 50 Monomereinheiten) können hingegen stark zusammengeknäult vorliegen, wobei diese aber auch gestreckt werden können. Hierbei kann Elastan als Kräuselstruktur mit sehr hoher Dehnbarkeit (mehrere 100 %, z.B. 700 %) vorliegen. Die Dichte kann z.B. zwischen 1,1 und 1,3 g/cm³ betragen und die Festigkeit beispielsweise 5 bis 12 cN/tex. Die Elastizität kann hierbei temperaturabhängig sein. Ferner können unter dem Begriff "Elastan" sowohl Elastan selbst, als auch verwandte thermoplastische Elastomere (z.B. Elastollan, Desmopan, Texin und Utechllan) verstanden werden.

Im Rahmen dieser Anmeldung kann unter dem Begriff "separat vorliegen" insbesondere verstanden werden, dass ein Stoff nicht in einen anderen Stoff inkorporiert ist. Beispielsweise liegen Cellulosefasern in einem Ausgangsstoff vor und Elastan liegt ebenfalls in dem Ausgangsstoff vor. Hierbei kann das Elastan in die Cellulosefasern inkorporiert sein. Weiterhin kann das Elastan aber auch separat von den Cellulosefasern vorliegen. In diesem Fall ist das Elastan ein Bestandteil des Ausgangsstoffs, ist jedoch nicht in die Cellulosefasern integriert.

Gemäß einem exemplarischen Ausführungsbeispiel der Erfindung wurde erstaunlicherweise gefunden, dass durch eine gezielte Steuerung von Restkonzentrationen im Rahmen eines Wiederverwendens (inklusive des Recyclingprozesseses, beziehungsweise der Aufbereitung des Ausgangsstoffs) neue Eigenschaften in einem herzustellenden (Lyocell)-Formkörper bzw. dessen textilen Folgeprodukten erreicht werden können. Diese so erreichte Funktionalisierung von Restbestandteilen aus dem Ausgangsstoff, welche auf thermoplastischen Elastomeren wie Elastan basieren, erlauben überraschenderweise eine effiziente Kompensation von (negativen) Eigenschaftsveränderungen, welche sich insbesondere durch den Anteil von recycelten Cellulosefasern in einem herzustellenden (Lyocell)-Formkörpers ergeben können.

Insbesondere lässt sich durch einen gezielten Anteil von Residualpolymeren, insbesondere Elastan, eine Kompensation der Festigkeitswerte erreichen, welche bislang durch Beimischung von recycelter (kurzkettiger) Cellulose deutlich vermindert wären. Möglicherweise kann hierbei die Festigkeit durch einen höheren Anteil von Elastan erhöht werden und durch einen höheren Anteil von recycelter Cellulose verringert werden.

Elastan zeigt überraschenderweise auch in untypisch hoher Konzentration innerhalb eines Lyocell- oder Viskose-Verfahrens keine Unverträglichkeiten. Im Gegenteil, im Zusammenspiel mit Cellulose kann sich nämlich eine große Affinität der hydrophilen PEG-Segmente des Elastans mit den hydrophilen Hydroxyl-und Ether-Strukturen der Cellulose ergeben. Dies wird durch eine starke Tendenz zur Bildung von Wasserstoffbrücken zwischen den beiden Polymeren verstärkt. Elastan, welches in Cellulosefasern inkorporiert ist, zeigt demnach keine Unverträglichkeiten. Das in Cellulosefasern inkorporierte Elastan kann somit zu der Funktionalisierung des herzustellenden Formkörpers beitragen. Eine solche Funktionalisierung von Kunststoff-Restbestandteilen, insbesondere in einem Lyocell- oder Viskose-Verfahren, ist bislang nicht bekannt. Somit kann die Dehnbarkeit bzw. Elastizität eines Formkörpers, insbesondere einer Faser, durch das Inkorporieren von Elastan gesteigert werden.

Gemäß einem Ausführungsbeispiel ist das Elastan prozessierbar und muss nicht teuer bzw. aufwändig abgetrennt werden, sondern kann ohne weiteren Aufwand mitverarbeitet (z.B. in einem Lyocell-/Viskose-Verfahren) werden und in Fasern inkorporiert werden. Dort bewirkt der Kunststoff keine negativen Eigenschaften, sondern sogar eine bessere Faserdehnbarkeit bzw. Elastizität.

Zusammengefasst wird also der Umstand genutzt, dass eigentlich unerwünschte Bestandteile von festen Ausgangsstoffen wie synthetische Kunststoffe, insbesondere Elastan, im Rahmen des Recyclings von Cellulose nicht aufwendig abgereichert werden müssen, sondern im Gegenteil als Beimengung sogar positive Eigenschaften und entsprechende Vorteile wie eine verbesserte Dehnbarkeit bzw. Elastizität bereitstellen können.

Im Weiteren werden zusätzliche Ausführungsbeispiele des Formkörpers und des Verfahrens beschrieben.

Gemäß einem Ausführungsbeispiel weist der regenerierte cellulosische Formkörper zumindest 0,01 %, insbesondere zumindest 0,1 %, weiter insbesondere 1 %, Polyurethan auf, wobei zumindest 10 % des Polyurethans Elastan zugeordnet sind. Dies hat den Vorteil, dass Polyurethan nicht mehr besonders sauber abgereichert werden muss, was technisch durchaus herausfordernd sein kann.

Stattdessen kann Polyurethan in dem Ausgangsstoff verbleiben, wodurch aufwendige und kostenintensive Abreicherungsprozesse nicht mehr notwendig sind. Dadurch, dass zumindest ein Teil des Polyurethans Elastan zugeordnet ist, können zusätzlich sogar noch weitere Vorteile erreicht werden, wie z.B. eine Verbesserung der Dehnbarkeit, der Elastizität oder der Festigkeitswerte der herzustellenden Fasern.

Gemäß einem weiteren Ausführungsbeispiel weist der regenerierte cellulosische Formkörper 0,1 % bis 5 % Elastan auf. Dies hat den Vorteil, dass ansonsten unvermeidliche negative Festigkeitsverminderungen bei einem Wiederverwenden von Cellulosefasern besonders effizient kompensiert werden können.

Es wurde erstaunlicherweise festgestellt, dass bis etwa 5 % Elastangehalt in (Lyocell)-Formkörpern (z.B. Fasern) keine nennenswerte negative Änderung der (Faser)eigenschaften festzustellen ist. Stattdessen können Dehnbarkeit, Elastizität und Festigkeitswerte verbessert werden, was durchaus wünschenswert sein kann.

Gemäß einem weiteren Ausführungsbeispiel weist der regenerierte cellulosische Formkörper ferner zumindest einen weiteren synthetischen Kunststoff, insbesondere weniger als 2 %, aus der Gruppe auf, welche besteht aus Polyester, Polyamid, Polyurethan und Polyether. Dies hat den Vorteil, dass das technisch aufwendige und kostenintensive Abreichern eines weiteren Kunststoffs zumindest teilweise entfällt. Stattdessen kann die Anwesenheit zumindest eines weiteren synthetischen Kunststoffs sogar die Eigenschaften der herzustellenden Faser in vorteilhafter Weise beeinflussen bzw. steuern. Ein Anteil von weniger als 2 % kann hierbei besonders vorteilhaft sein, um eine gute Einbindung eines weiteren synthetischen Kunststoffs in die Cellulosefasern zu gewährleisten.

Gemäß einem weiteren Ausführungsbeispiel weist zumindest ein Teil des weiteren synthetischen Kunststoffs zumindest eine Kompatibilität auf, welche zumindest eine aus der Gruppe ist, welche besteht aus Ester-Kompatibilität, Amid-Kompatibilität und Ether-Kompatibilität. Dies hat den Vorteil, dass der zumindest eine weitere synthetische Kunststoff (z.B. ein oder mehr typische Faserpolymere, insbesondere Faserpolyester) direkt aus Ausgangsstoffen, wie Textilien, verwendet und effizient eingebunden werden kann.

Unter Kompatibilität kann insbesondere verstanden werden, dass zwei chemische (funktionelle) Gruppen miteinander kompatibel sind. Beispielsweise besteht eine große Affinität zwischen hydrophilen PEG-Segmenten von Elastan mit hydrophilen Hydroxyl-und Ether-Strukturen von Cellulose. In diesem Fall weist das Elastan eine Cellulose-Kompatibilität und die Cellulose eine Ether-Komptabilität auf. Die Kompatibilität kann auch als Einbindung chemischer Gruppen untereinander beschrieben werden.

Es können geringe Anteile (z.B. unter 2%) von Polyamiden und Polyestern in dem Recycling-Verfahren mitverarbeitet werden, um eine gute Einbindung zu erreichen. In einem Recycling-Verfahren ist dies ein deutlicher Vorteil, denn das zumindest teilweise Entfernen von weiteren synthetischen Polymeren kann unverhältnismäßig aufwändig sein. Die oben genannten weiteren synthetischen Kunststoffe können in Ausgangsstoffen wie Textilien sehr häufig und verbreitet enthalten sein. Daher stellt eine Akzeptanz geringer Restmengen eine massive Erleichterung eines Recyclingverfahrens dar.

Ohne an eine bestimmte Theorie gebunden zu sein, kann das gute Einbindungsverhalten des weiteren synthetischen Kunststoffs beschrieben werden durch eine Kompatibilität zwischen Elastan, Cellulose und weiterem synthetischen Kunststoff wie Polyamid oder Polyester. Der Polyurethan (PUR)-Anteil von Elastan ist hierbei von besonderem Interesse, denn PUR kann gleichzeitig sowohl als Polyester als auch als Polyamid wirken. Die Wiederholeinheit von PUR kann als R1-NH-CO-O-R2 geschrieben werden, weist also eine Ester-Bindung (CO-O-R2) und eine Amid-Bindung (R1-NH-CO) auf. Wie oben bereits beschrieben ist der PEG-Anteil in Elastan, wegen seiner typischen Ether-Struktur, für die gute Kompatibilität mit den Glycanether-Bindungen der Cellulose verantwortlich. Es findet zwischen den Stoffen also eine gute Homogenisierung/Mischung statt. Ein entsprechender Einbindungsprozess kann gemäß einem Ausführungsbeispiel zusätzlich stark von der Temperatur des jeweiligen Verfahrens abhängen. Die beschriebenen Kompatibilitäten können z.B. auch auf die im Folgenden beschriebenen Ausführungsbeispiele angewendet werden.

Die Amid-Kompatibilität von Elastan kann es ermöglichen, typische Faserpolyamide (z.B. PA6, PA6.6 oder PA6.10) aus Ausgangsstoffen wie Textilien einzubinden.

Weiterhin kann es die Ester-Kompatibilität von Elastan ermöglichen, typische Faserpolyester (z.B. PET) aus Ausgangsstoffen wie Textilien einzubinden.

Die Ether-Struktur von Elastan kann zu einer hohen Homogenisierung in einer Spinnlösung vor einem Spinnprozess in einem Lyocell- oder Viskose-Verfahren führen und dadurch zu einer sehr guten Durchmischung. Dies insbesondere auch auf chemischer Ebene, denn die Kompatibilität der Ether-Struktur von Elastan ist sehr ähnlich zu der Ether-Struktur von Cellulose.

Gemäß einem weiteren Ausführungsbeispiel ist der weitere synthetische Kunststoff zumindest teilweise in der Cellulose inkorporiert. Dies hat den Vorteil, dass auch der weitere synthetische Kunststoff, zusammen mit Elastan, direkt innerhalb der Faser wirken kann, um deren Eigenschaften vorteilhaft zu beeinflussen. So kann z.B. die Festigkeit der Faser erhöht werden. Weiterhin kann die Fibrillationswirkung reduziert werden, wenn der weitere synthetische Kunststoff ebenfalls wie ein Schmelzkleber wirkt. Unter Fibrillation kann insbesondere das örtlich begrenzte Abspalten fibrillärer Elemente längs der Faserachse verstanden werden. Dies insbesondere bei einer gleichzeitigen Einwirkung von Mechanik und Feuchtigkeit auf die Faser.

Gemäß einem weiteren Ausführungsbeispiel weist der regenerierte cellulosische Formkörper zumindest eines der im Folgenden beschriebenen Merkmale auf.

Der regenerierte cellulosische Formkörper ist ausgewählt aus der Gruppe, welche aufweist ein Filament, Fasern, eine Folie, ein Gewebe, ein Vlies, eine (Mikro)kugel, Beads und einem Schwamm.

Der regenerierte cellulosische Formkörper weist eine Faserdehnbarkeit auf, welche um zumindest 10 %, insbesondere zumindest 20 %, höher ist als die Faserdehnbarkeit einer üblichen Lyocellfaser. In Bezug auf die Faserdehnbarkeit des regenerierten cellulosischen Formkörpers wurde gefunden, dass diese um bis zu 20 % zunimmt (abhängig vom Elastan-Gehalt) verglichen mit einer Standard-Lyocellfaser.

Der regenerierte cellulosische Formkörper weist Festigkeitswerte einer üblichen Lyocell-Faser auf. Durchschnittliche Faserdaten einer üblichen Lyocellfaser (z.B. TENCEL^{®}) können wie folgt vorliegen. Höchstzugkraft konditioniert (FFk): 40,2 cN/dtex; Höchstzugkraft nass (FFn): 37,5 cN/dtex, Höchstzugkraftdehnung konditioniert (FDk): 13,0 %, Höchstzugkraftdehnung nass (FDn): 18,4 % (Quelle: Lenzinger Berichte 87 (2009) 98-105, Tabelle 1). Höchstzugkraft (FFk) kann also in dem Bereich 35 bis 45 cN/dtex, insbesondere 38 bis 42 cN/dtex, sein, Höchstzugkraft nass (FFn) in dem Bereich 32 bis 42 cN/dtex, insbesondere 35 bis 40 cN/dtex. Höchstkraftdehnung (FDk) kann in dem Bereich 10 bis 15 % liegen und Höchstzugkraft nass (FDn) in dem Bereich 16 bis 20 %.

Gemäß einem Ausführungsbeispiel kann der Anteil von synthetischem Kunststoff (Elastan, optional mit zusätzlichen Anteilen von z.B. PET, PUR und PA) in einer bestimmten Konzentration vorliegen. Dies kann zu einer besonders homogenen Verteilung in einer Spinnlösung führen, so dass sich der Kunststoff gleichmäßig im Spinnprozess in den herzustellenden (Lyocell)-Formkörper fein verteilt einlagert. Auf diese Weise können spezifische Fasereigenschaften entsprechend gesteuert bzw. beeinflusst werden.

Der regenerierte cellulosische Formkörper weist zudem eine reduzierte Tendenz zur Fibrillation im Vergleich zu einer üblichen Lyocellfaser auf. Die erstaunlicherweise derart erreichte niedrigere Fibrillationsneigung kann dadurch erklärt werden, dass eingebundene Restkunststoffe wie Elastan im Sinne einer separierenden (zumindest teilweise amorphen) Gleitschicht das Gleiten der einzelnen kristallinen Zellulosestränge unterstützen und zusätzlich die Querhaftung unter den Cellulosesträngen steuern. Dies kann bewirken, dass die fibrillationstypische Delamination entsprechend gehemmt wird.

Gemäß einem weiteren Ausführungsbeispiel weist der regenerierte cellulosische Formkörper einen Anteil an synthetischem Kunststoff auf, welcher zumindest zu 0,1 % aus dem Ausgangsstoff stammt. Dies hat den Vorteil, dass der Formkörper besonders ressourcenschonend hergestellt werden kann. Der synthetische Kunststoff in dem Formkörper kann vollständig oder zumindest teilweise aus dem Ausgangsstoff stammen. Somit ist im Wesentlichen keine Zugabe von weiterem Kunststoff notwendig. Ferner kann auch zumindest teilweise auf ein aufwendiges Abreichern des Kunststoffs aus dem Ausgangsstoff verzichtet werden.

Gemäß einem weiteren Ausführungsbeispiel kann der Ausgangsstoff ganz oder teilweise Reste aus einer Kleidungsherstellung und/oder Altkleider (zum Beispiel Mischtextilien) aufweisen. Anders ausgedrückt können als zumindest ein Teil des Ausgangsstoffs Textilien, insbesondere Reste aus einer Kleidungsherstellung und/oder Altkleider, verwendet werden. Besonders bevorzugt ist das Heranziehen von Resten aus der Kleidungsherstellung, da derartiger Verschnitt bzw. Ausschuss häufig einen sehr hohen Celluloseanteil und somit einen hohen Reinheitsgrad aufweist. Insbesondere kann ein solches Pre-Consumer-Textil frei von Fremdkörpern, wie Knöpfen, Nähten oder Textildruck sein. Zum Beispiel können Reste aus der Kleidungsherstellung im Wesentlichen gewobene (und optional gefärbte) Cellulose aufweisen, sodass solche Reste bedarfsweise auch direkt in Lösung überführt werden können, um daraus mittels des Lyocell Verfahrens Cellulose rückzugewinnen. Bei Altkleidern oder Post-Consumer-Textilien können größere Fremdkörper wie Knöpfe, Drucke und Nähte bereits beim oder nach dem mechanischen Zerkleinern abgetrennt werden. Andere Fremdstoffe der Reste oder Altkleider, wie zum Beispiel Farben und synthetische Kunststoffe (wie Polyester und Elastan), können vor dem Lösen eines entsprechenden Ausgangsstoffs zum Bilden des Dopes bzw. der Spinnlösung ganz oder teilweise entfernt werden, können aber auch ganz oder teilweise in der Spinnlösung verbleiben.

Gemäß einem weiteren Ausführungsbeispiel weist das Verfahren ferner auf: i) Lösen des Ausgangsstoffs in einem Lösungsmittel mittels eines Direktlöseverfahrens, insbesondere in N-Methylmorpholin-N-oxid, NMMO, um eine Spinnlösung zu erhalten, und ii) Extrudieren der Spinnlösung durch Spinndüsenöffnungen, insbesondere bei weniger als 150° C, derart, dass ein zumindest teilweises Inkorporieren von synthetischem Kunststoff, insbesondere Elastan, in die Cellulose ermöglicht ist. Dies hat den Vorteil, dass ein erprobter und etablierter Prozess direkt angewendet werden kann, um ein besonders effizientes Einbinden von synthetischem Kunststoff in Cellulose zu realisieren.

Kunststoffe können prinzipiell zur Festigkeitsverbesserung in Fasern eingesetzt werden. Hierbei sind jedoch Temperaturen von zumindest 250° C zum Aufschmelzen des Kunststoffs, insbesondere eines thermoplastischen Kunststoffs, notwendig. Im Rahmen eines Lyocell- oder Viskose-Verfahrens kommt es jedoch während der Extrusion von Spinnlösung durch Spinndüsenöffnungen zu einem mechanischen Strecken und einer damit verbundenen sehr starken Verformung in der Längsrichtung. Die durch den Spinnprozess erwirkte massive Längsorientierung kann auch auf Elastan und andere synthetische Kunststoffe übertragen werden, welche sich in der Spinnlösung befinden. Die langgestreckten Anteile, insbesondere der PEG-Anteil von Elastan, stellen somit eine gute Basis für ein Einbetten von Cellulose dar, welche sich ebenfalls in der Spinnlösung befindet und im Wesentlichen zur selben Zeit ausfällt wie der synthetische Kunststoff. Auf diese Weise können Kunststoffe in Fasern bei einer Temperatur von unter 150° C (Temperatur im Lyocell-Verfahren) effizient eingebunden werden. Hierbei ist der synthetische Kunststoff, insbesondere Elastan, prozessierbar, und muss nicht teuer/aufwändig abgetrennt werden, sondern kann ohne weiteren Aufwand mitverarbeitet werden, in einem Lyocell-Verfahren, und in die Faser inkorporiert werden. Dort bewirkt der Kunststoff keine negativen Eigenschaften, sondern sogar eine bessere Faserdehnbarkeit bzw. Elastizität.

Durch eine gesteuerte Aufbereitung von Ausgangsstoff(en) kann sichergestellt werden, dass weitere synthetische Kunststoffe wie PUR, PA, PET, PE in einer geeigneten Konzentration in einem Lyocell- oder Viskose-Verfahren verbleiben. Bei entsprechend geeigneter Konzentration können sich die in der Spinnlösung befindlichen Kunststoff-Anteile ähnlich wie ein Verbundsystem Faser-Thermoplast verhalten.

In einem höheren Temperaturbereich ist gleichzeitig, bei entsprechendem Elastangehalt in der Cellulosefaser, der thermoplastische Effekt von Elastan nutzbar. Dies führt bildhaft gesprochen zu einer gewissen steuerbaren Klebrigkeit im Innern der Faser, was sich für thermoplastische Hafteffekte entsprechend nutzen lassen kann.

Gemäß einem weiteren Ausführungsbeispiel weist das Verfahren ferner auf: Zuführen in die Spinnlösung von zumindest einem Stoff aus der Gruppe, welche besteht aus Cellulosefasern, Fremdmaterialien, Hemicellulose, Zellstoff und Cellulosefasern mit kurzer Kettenlänge. Dies hat den Vorteil, dass Eigenschaften des herzustellenden Formkörpers gezielt gesteuert bzw. beeinflusst werden können.

Im Rahmen eines Lyocell-Verfahrens können zelluloseverstärkte Lyocellfasern dadurch hergestellt, dass in dem NMMO-Wasser-Gemisch, neben der Sättigung mit Cellulose, noch ein Überschuss an Cellulosefasern in der Spinnlösung verbleibt und gemeinsam versponnen wird. Dies kann eine zusätzliche Festigkeitsverbesserung der resultierenden Lyocellfaser durch den Effekt einer "Faserverstärkung in der Faser" bewirken. Dadurch kann es möglich werden auch weitere Festigkeit-reduzierende Effekte, welche durch Ausgangsstoffe wie Textilien hervorgerufen werden, zu kompensieren. Auf diese Weise könnten z.B.
i) in NMMO kaum lösliche Fremdbestandteile, die in Alttextilien bereits als Fasern vorliegen, mitverwendet werden;
ii) Festigkeit-vermindernde weitere Zucker wie Hemicellulose eingebunden werden; und
iii) Cellulosefaser-Anteile mit kurzen Kettenlängen in größerer Menge verwendet werden.

Dadurch lassen sich auch Fremdfasern und Fremdmaterialien in die Lyocellfaser einbinden, welche keine verstärkenden Eigenschaften besitzen, sondern eher Festigkeit-vermindernd sind.

Normalerweise führen z.B. kurze Kettenlängen zu einer Festigkeitsreduktion. Durch die erwähnte Kompensation durch Elasten und optionale weitere synthetische Kunststoffe kann trotz eines hohen Anteils von kurzkettiger Cellulose dadurch wieder eine Festigkeit nahe bei den Werten einer nicht-recycelten Cellulosefaser erreicht werden. Insbesondere das mehrfache Durchlaufen eines Stoffkreislaufes bewirkt eine grundsätzliche Reduktion der Kettenlängen. Dabei werden durch äußere Einflüsse (Sonne, Waschen, Alterung, Chemikalien) im Rahmen der vorherigen Herstellungs-, Nutzungs-, und Entsorgungszyklus entsprechende Celluloseketten aufgebrochen, was generell zu kürzeren Kettenlängen in einem herzustellenden Formkörper führen kann.

Der Begriff "Hemicellulose" kann hierbei als Sammelbegriff für in pflanzlicher Biomasse vorkommende Gemische von Polysacchariden (Vielfachzuckern) in veränderlicher Zusammensetzung verstanden werden. Als am häufigsten vorkommende Monomere (Monosaccharide, Einfachzucker) können Pentosen, z.B. Xylose und Mannose, bezeichnet werden.

Gemäß einem weiteren Ausführungsbeispiel weist der Ausgangsstoff zumindest einen weiteren synthetischen Kunststoff aus der Gruppe auf, welche besteht aus Polyester, Polyamid, Polurethan und Polyether. Dies hat den Vorteil, dass das technisch aufwendige und kostenintensive Abreichern eines weiteren Kunststoffs zumindest teilweise entfällt. Stattdessen kann die Anwesenheit zumindest eines weiteren synthetischen Kunststoffs sogar die Eigenschaften der herzustellenden Faser in vorteilhafter Weise beeinflussen bzw. steuern.

Gemäß einem weiteren Ausführungsbeispiel weist das Verfahren ferner auf: zumindest teilweises Behalten eines ersten zusätzlichen synthetischen Kunststoffs, insbesondere einem aus der Gruppe, welche besteht aus Polyester, Polyamid, und Polyether, von dem Ausgangsstoff zum Erzeugen des Cellulose aufweisenden Formkörpers derart, dass der erste zusätzliche synthetische Kunststoff im Wesentlichen in dem Cellulose aufweisenden Formkörper beinhaltet ist. Dies hat ebenfalls den Vorteil, dass das technisch aufwendige und kostenintensive Abreichern eines weiteren Kunststoffs zumindest teilweise entfällt. Stattdessen kann die Anwesenheit zumindest eines weiteren synthetischen Kunststoffs sogar die Eigenschaften der herzustellenden Faser in vorteilhafter Weise beeinflussen bzw. steuern.

Zusätzlich oder alternativ weist das Verfahren fern auf: Entfernen, insbesondere vollständiges Entfernen, weiter insbesondere selektives Entfernen (selektives Abreichern), eines zweiten zusätzlichen synthetischen Kunststoffs, insbesondere einem aus der Gruppe, welche besteht aus Polyester, Polyamid und Polyether, aus dem Ausgangsstoff derart, dass der zweite zusätzliche synthetische Kunststoff im Wesentlichen nicht in dem Cellulose aufweisenden Formkörper beinhaltet ist. Dies hat den Vorteil, dass die gewünschten Anteile von Kunststoffen, z.B. PET und PUR, besonders gut (gezielt) eingestellt werden können. Hierbei können der erste und der zweite zusätzliche synthetische Kunststoff derselbe sein. Ebenfalls können der erste und der zweite zusätzliche synthetische Kunststoff verschieden sein.

Ein entsprechend hergestellter recycelter (Lyocell)-Formkörper kann in seinen Eigenschaften denen einer nicht-recycelten Cellulosefaser sehr ähnlich sein. Insbesondere können die Eigenschaften durch zusätzliche Beigabe von recycelten Lyocell-Gewebe noch weiter an jene von nicht-recycelten Lyocellfasern angenähert werden, so dass messtechnisch kaum mehr ein Unterschied feststellbar ist.

Gemäß einem weiteren Ausführungsbeispiel weist das Verfahren ferner auf: i) Zuführen von zumindest einem weiteren Ausgangsstoff, welcher Cellulose und zumindest einen synthetischen Kunststoff aufweist, insbesondere einen synthetischen Kunststoff aus der Gruppe, welche besteht aus Elastan, Polyester, Polyamid, Polyether und Polyurethan, wobei der Anteil an synthetischem Kunststoff in dem Ausgangsstoff und dem weiteren Ausgangsstoff verschieden ist, und ii) Erzeugen des Cellulose aufweisenden Formkörpers basierend auf dem Ausgangsstoff und dem weiteren Ausgangsstoff derart, dass der regenerierte cellulosische Formkörper zumindest eine vorbestimmte Eigenschaft aufweist. Dies hat den Vorteil, dass im Wesentlichen ohne zusätzlichen Einsatz von chemischen Verfahren die gewünschten Anteile von synthetischem Kunststoff entsprechend eingestellt bzw. beeinflusst werden können.

In einer bevorzugten Ausführungsform werden in Ausgangsstoffen enthaltene Restmengen von synthetischem Kunststoff auf eine spezifische Menge eingestellt. Der nach Zugabe von mehreren spezifischen Ausgangsstoffen hergestellte regenerierte cellulosische Formkörper kann dann gewünschte Kunststoff-Konzentrationen bzw. Zusammensetzungen und entsprechend spezifische chemisch/physikalische Eigenschaften aufweisen. Dies können beispielsweise Eigenschaften sein, welche denen einer nicht-recycelten Lyocell-Faser entsprechen.

Insbesondere lässt sich durch Mischen von verschiedenen Zusammensetzungen von Ausgangsstoffen wie Altkleidern und/oder Resten aus der Kleiderherstellung eine spezifische Eigenschaft, z.B. die Konzentration von Elastan und optional zumindest einem weiteren synthetischen Kunststoff, einstellen und somit die nachfolgende Verwendung und/oder Funktionalisierung gezielt steuern.

In einer weiteren bevorzugten Ausführungsform werden verschiedene Ausgangsstoffe von unterschiedlicher Zusammensetzung derart gemischt, dass sich die gewünschten Anteile der unterschiedlichen Kunststoffe einstellen. Diese chemiereduzierte/chemiefreie Ausführungsvariante (nur durch Mischung von Ausgangsstoffen erreicht) kann vom Ressourcenverbrauch und aufgrund von ökologischen Aspekten her als besonders vorteilshaft angesehen werden.

Gemäß einem Ausführungsbeispiel kann das Verfahren ein Nachbearbeiten der ausgefällten Cellulose zum Erhalten des Formkörpers aus der Vorform des Formkörpers aufweisen. Ein solches optionales Nachbearbeiten kann zum Beispiel ein Trocknen, Imprägnieren und/oder Umformen der erhaltenen Cellulose-Filamente aufweisen. Durch ein entsprechendes Nachbearbeiten ist es möglich, am Ende des Lyocell-Verfahrens anwendungsspezifisch die Formkörperherstellung abzuschließen.

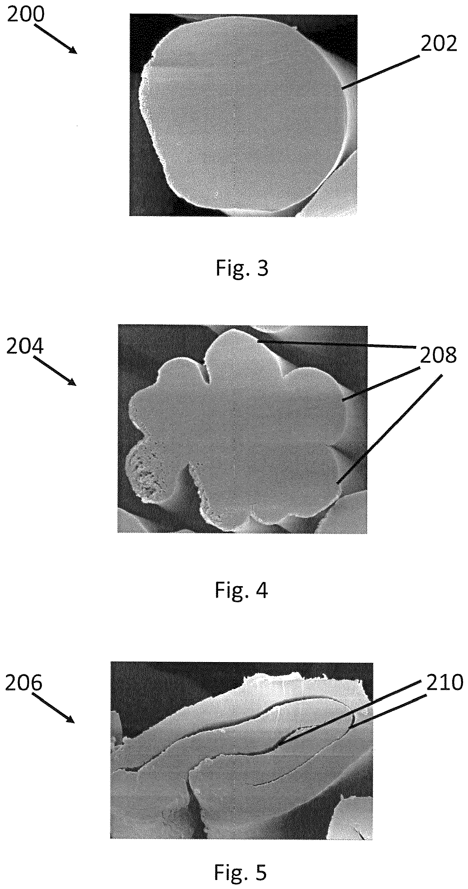

Gemäß einem Ausführungsbeispiel können Fasern des Ausgangsstoffs und/oder Fasern des Formkörpers eine glatte runde Außenfläche aufweisen. Wie in Figur 3 dargestellt, zeichnen sich mittels des Lyocell-Verfahrens extrahierte Cellulosefasern durch eine derartige Form aus und heben sich daher von anderen Faserformen ab, wie sie in natürlicher Baumwolle vorkommen oder mittels eines Viskoseverfahrens erhalten werden.

Die erfindungsgemäß hergestellten Formkörper können zum Beispiel als Verpackungsmaterial, Fasermaterial, Textilverbundstoffe, Faserverbundstoffe, Faservliese, Nadelfilze, Polsterwatte, Gewebe, Gestricke, als Heimtextilien, wie Bettwäsche, als Kleidungsstücke, als Füllstoff, Beflockungsstoff, Krankenhaustextilien, wie Unterlagen, Windel oder Matratzen, als Stoff für Wärmedecken, Schuheinlagen, sowie Wundverbände verwendet werden. Ausführungsbeispiele der Erfindung können sowohl in verschiedensten technischen Bereichen als auch in der Medizin und in Kosmetik und Wellness anwendbar sein. In der Medizin können zum Beispiel Materialien zur Wundbehandlung und Wundheilung aus einem Träger, der die mechanischen Eigenschaften bestimmt, und einem biokompatiblem Beschichtungsmaterial aufgebaut sein, das besonders verträglich mit der Haut und mit der Oberfläche der Wunde ist. Zahlreiche andere Anwendungen sind möglich.

Im Folgenden werden exemplarische Ausführungsbeispiele der vorliegenden Erfindung mit Verweis auf die folgenden Figuren detailliert beschrieben.

Figur 1 zeigt ein Flussdiagramm eines Verfahrens zum Herstellen eines regenerierten cellulosischen Formkörpers gemäß einem exemplarischen Ausführungsbeispiel der Erfindung.

Figur 2 zeigt eine Apparatur zum Herstellen eines regenerierten cellulosischen Formkörpers mittels eines Lyocell-Verfahrens gemäß einem exemplarischen Ausführungsbeispiel der Erfindung.

Figur 3 zeigt eine mittels eines Lyocell-Verfahrens hergestellte Cellulosefaser.

Figur 4 zeigt eine mittels eines Viskose-Verfahrens hergestellte Cellulosefaser.

Figur 5 zeigt eine natürliche Cellulosefaser aus einer Baumwollpflanze.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung werden residuale Polymere aus Ausgangsstoffen als Haftungsverstärker unter Cellulosefasern oder als thermoplastischen Eigenschaftsverstärker innerhalb eines Lyocell-Formkörpers verwendet. Sie bleiben im Wesentlichen inert, bis zur Fertigstellung eines bestimmten Schrittes im Produktionsprozess. Insbesondere lässt sich somit eine nachträgliche Versteifung eines Gewebes durch Wärme (analog Schmelzklebstoff) erreichen (z.B. bügelfreie Hemden, Plissieren, usw.). Zur Herstellung von Geweben, welche die Eigenschaft einer hoher Formstabilität haben (z.B. bügelfrei), wird üblicherweise ein aufwendiges Verfahren eingesetzt. Dies kann beispielsweise die Kombination sehr aufwendiger chemischer Verfahren sein, wie eine Behandlung mit Flüssigammoniak. Sie lässt das Hemd lange Zeit wie neu aussehen. Ebenso möglich ist die sogenannte "Feuchtvernetzung", bei der zwischen den Molekülen von Baumwollcellulose eine elastische Brücke gebaut wird. Diese Brücke zieht den Stoff nach dem Waschen wieder in Form. Die Feuchtvernetzung mit "Kunstharzen" verlangt jedoch eine sehr präzise Arbeitsweise.

Durch die gezielte Steuerung des Anteils von residualen Polymeren (z.B. Poylurethane aus Elastan von Alttextilien), gemäß einem Ausführungsbeispiel, lässt sich jedoch eine gewisse Thermoplastizität in einer Lyocellfaser erzielen, welche den entsprechenden Anteil von residualen Polymeren aus einem Ausgangsstoff via den Abreicherungsprozess, gemäß einem Ausführungsbeispiel der Erfindung, über ein Lyocell-Verfahren wieder in einen Lyocell-Formkörper zurückführt.

Gemäß einem weiteren exemplarischen Ausführungsbeispiel der Erfindung werden die thermoplastischen Eigenschaften von residualem Polyurethan, insbesondere thermoplastischem Polyurethan (TPU) genutzt. Die von dieser Stoffgruppe her bekannten unterschiedlichen Eigenschaften bezüglich Hart- und Weichphase sowie deren unterschiedlichen Kristallisationsgrad kann durch eine Steuerung der Verarbeitungszeit und der Verarbeitungstemperatur (also der Verweildauer im und Temperatur der Spinnlösung) als zusätzlicher Faktor in die Funktionalisierung von residualen Kunststoffen einfließen. Dabei lassen sich folgende Eigenschaften kombinieren:
i) hoch kristalline und auf der anderen Seite transparente TPU ergänzen sich in den Anwendungsfeldern zu vielfältigen Einsatzmöglichkeiten und hoher Variationsbreite des Materials;
ii) eine an Methylendiphenylisocyanate (MDI) gekoppelte Weichphase besteht einerseits aus Polyesterdiolen mit Molmassen zwischen 1000 und 2000 g/mol auf Basis von Adipinsäure, oder sie besteht aus reinem Polycaprolakton. Andererseits sind Polyetherdiole aus Tetrahydrofuran oder C2, C3-Glykolen möglich.

Es kann nun je nach Anwendungsfall entscheiden werden, welche Weichphase geeignet ist. Zwei wesentliche Aspekte sind die Oxidationsempfindlichkeit der Ether- und die Hydrolyseanfälligkeit der Ester-TPU.

Aus der organischen Chemie ist die Reaktion eines Ethers mit Sauerstoff zum Hydroperoxid und Alkohol bekannt, die im Falle eines Polymers zum Kettenbruch, also zum Molmassen-Abbau führt. Dies bedingt die Notwendigkeit, Polyether-typen mit entsprechenden Alterungsschutzmitteln (z. B. gehinderten Phenolen) zu stabilisieren, um die Lebensdauer sinnvoll zu erhöhen. Vergleicht man die Ether- und Ester-TPU in einer Luftalterung bei 100° C über die Zeit, so wird die bessere Beständigkeit des Polyesters sehr deutlich. Hier ist die Abnahme der Zugfestigkeit über die Lagerdauer gemessen worden.

Demgegenüber zeichnet sich ein Ether-TPU durch eine gute Resistenz gegen hydrolytischen und mikrobiellen Abbau aus. Daher sind extreme Anwendungen im Außenbereich geeignete Einsatzprofile für Polyether-Typen. Bei hoher Lichteinwirkung kann zusätzlich noch gegen Schädigungen durch UV-Licht stabilisiert werden.

Basierend auf dem oben diskutierten ist es möglich, in die Bereiche weicher TPU ohne Weichmacher vorzudringen. Dies ist bisher nicht mit Erfolg durchgeführt worden, weil mit der Verringerung des Hartphasenanteiles das TPU nicht nur weicher, sondern auch plastischer wird, und nach der thermoplastischen Verarbeitung viel zu langsam rekristallisiert, um in vertretbarer Zeit Fertigteile produzieren zu können. Ein weiterer Effekt ist zudem erkennbar, das ist die langsame Kristallisation der kurzen Hartphasenblöcke. Wird nämlich der Anteil an Hartphase deutlich reduziert, so werden auch die kristallisierenden Blöcke spürbar kürzer. Das reduziert die Schmelztemperatur, aber auch die Rekristallisation. Diese langsame Kristallisation bewirkt zudem ein allmähliches Nachhärten des Materials nach der Verarbeitung.

Da für einen angelieferten Ausgangsstoff unbekannten Ursprungs die entsprechenden Detailmaterialparameter oftmals nicht bekannt sind, lässt sich durch die dynamische Anpassung der beschriebenen Prozessierungsparameter (Zeit und Temperatur) in der Spinnlösung eine Universalität für den Großteil der recycelten PUR finden, welche zu den gewünschten Materialeigenschaften führen. Alternativ kann auf unterschiedliche Varianten von PUR im Rohrezyklat durch entsprechende Anteilsvariationen eine (gegebenfalls sogar dynamische Anpassung im Rahmen eines Conti-Prozesses) Anpassung der Prozessstabilität erreicht werden, ohne die Materialparameter des resultierenden Lyocell-Formkörpers zu beeinträchtigen.

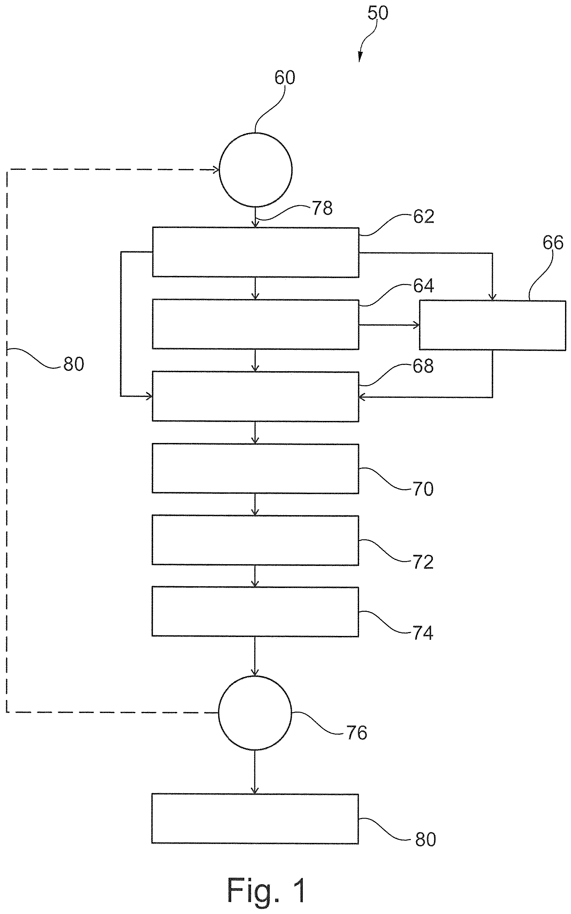

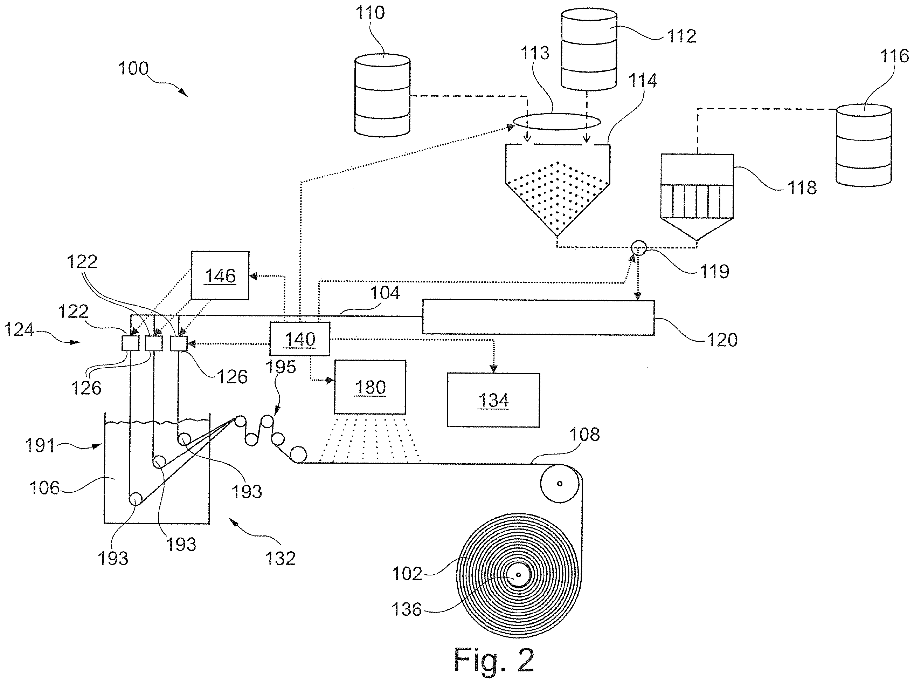

**Figur 1** zeigt ein Flussdiagramm 50 eines Verfahrens zum Herstellen eines regenerierten cellulosischen Formkörpers 102 (vergleiche Figur 2) gemäß einem exemplarischen Ausführungsbeispiel der Erfindung.

Der Ausgangsstoff 110 (vergleiche Figur 2) weist Cellulose und Elastan, optional weitere synthetische Kunststoffe, auf und liegt in Form von Altkleidern und/oder Resten aus einer Kleidungsherstellung vor.

Wie mit Block 60 dargestellt, kann ein so hergestellter Ausgangsstoff 110, im Falle von Altkleidern, durch einen Verbraucher verwendet werden, zum Beispiel als Kleidungsstück. Wenn der Verbraucher das Kleidungsstück entsorgt, kann dieses als Post-Consumer Ausgangsstoff 110 für ein nachfolgendes Lyocell- oder Viskoseverfahren verwendet werden, wobei ersteres im Weiteren näher beschrieben wird.

Es ist alternativ oder ergänzend ebenso möglich, einen Cellulose aufweisenden Pre-Consumer Ausgangsstoff 110 zu verwenden, zum Beispiel Verschnittreste aus der Kleidungsherstellung.

Im Weiteren wird beschrieben, wie auf Basis des zumindest teilweise Cellulose aufweisenden Ausgangsstoffs 110 Formkörper 102 aus Cellulose gemäß einem Ausführungsbeispiel der Erfindung hergestellt werden können. Hierfür wird der Ausgangsstoff 110 einer Apparatur 100 (siehe Figur 2) zum Durchführen eines Lyocell-Verfahrens zugeführt, vergleiche Bezugszeichen 78.

Dort kann zunächst ein mechanisches Zerkleinern 62 des Ausgangsstoffs 110 durch Schreddern erfolgen. Dadurch können vor allem große nichtcellulosische Störstoffe aus dem Ausgangsstoff 110 entfernt werden, beispielsweise Knöpfe, Nähte und Drucke der Altkleider, die zum Erzeugen des Ausgangsstoffs 110 zumindest teilweise verwendet worden sind. Durch das mechanische Zerkleinern 62 kann zum Beispiel der Ausgangsstoff 110 in Einzelfasern zertrennt werden.

Es ist auch möglich (siehe Block 64), den Cellulose aufweisenden Ausgangsstoff 110 mit anderen Cellulose aufweisenden Materialien gemeinsam für das nachfolgende Lyocell-Verfahren einzusetzen. Somit kann der Ausgangsstoff 110 mit einem weiteren Ausgangsstoff vermischt werden, welcher Cellulose und zumindest einen synthetischen Kunststoff aufweist, siehe Block 64. Dieser zugeführte weitere Ausgangsstoff weist einen Anteil an synthetischen Kunststoffen auf, welcher von dem Anteil an synthetischem Kunststoff in dem Ausgangsstoff 110 verschieden ist. Das Erzeugen des regenerierten cellulosischen Formkörpers kann nun basierend auf dem Ausgangsstoff 110 und dem weiteren Ausgangsstoff ausgeführt werden, so dass der regenerierte cellulosische Formkörper 102 einen vorbestimmten Anteil an synthetischem Kunststoff enthält. Der weitere Ausgangsstoff kann alternativ oder ergänzend zum Beispiel auch Reste aus einer Kleidungsherstellung aufweisen.

Unmittelbar nach dem mechanischen Zerkleinern 62 bzw. unmittelbar nach dem Mischen 64 kann ein direktes Lösen 68 des (reinen bzw. gemischten) Ausgangsstoffs 110 in einem weiteren Lösungsmittel 116 (zum Beispiel tertiäre Aminoxide wie zum Beispiel N-Methylmorpholin-N-oxid (NMMO)) vorteilhaft ohne chemische Vorbehandlung erfolgen. Genauer gesagt kann der mechanisch zerkleinerte (und optional gemischte) Ausgangsstoff 110 insbesondere ohne chemische Reinigung und ohne Einstellung der Viskosität direkt in Lösung übergeführt werden. Auf diese Weise kann das Herstellungs- bzw. Recyclingverfahren außergewöhnlich einfach und schnell sowie umweltfreundlich durchgeführt werden. Es hat sich überraschenderweise herausgestellt, dass nach dem mechanischen Zerkleinern 62 in dem Ausgangsstoff 110 Elastan als verbleibender Fremdstoff (jedoch auch weitere synthetische Kunststoffe) das Lyocell-Verfahren nicht stört und die Qualität der wiedergewonnenen Lyocell-Cellulose nicht negativ beeinflusst. Im Gegenteil, gewisse Mengen von Elastan können in den hergestellten Cellulosefasern verbleiben, ohne deren Eigenschaften zu verschlechtern sondern um diese sogar zu verbessern. Auch gewisse Mengen verbleibenden Polyesters stören das erhaltene Produkt nicht.

Alternativ kann das Verfahren nach dem mechanischen Zerkleinern 62 (oder nach dem Mischen 64) und vor dem Lösen 68 ein optionales chemisches Reinigen 66 des Ausgangsstoffs 110 aufweisen. Ein solches optionales Reinigen 66 kann zum Beispiel ein zumindest teilweises Entfernen von Farbstoffen durch Bleichen aufweisen. Dadurch ist es möglich, den Ausgangsstoff 110 vor einem nachfolgenden Lösen 68 des Ausgangsstoffs 110 in Lösungsmittel 116 ganz oder teilweise zu entfärben, beispielsweise um weiße oder graue Formkörper 102 herzustellen. Es ist alternativ oder ergänzend auch möglich, dass im Rahmen des optionalen chemischen Reinigens 66 der Ausgangsstoff 110 (vor oder nach seinem Lösen 68) zumindest teilweise von Fasern des Ausgangsstoffs 110 vernetzenden Vernetzern befreit wird. In Anwendungen, in denen solche Vernetzer zwischen den Fasern des Ausgangsstoffs 110 vorliegen, kann der Ausgangsstoff 110 zum Beispiel mittels einer alkalischen oder einer sauren Vorbehandlung von diesen Vernetzern ganz oder teilweise befreit werden. Dies verbessert die Lösbarkeit des Ausgangsstoffs 110 zusätzlich. Mittels des Reinigens 66 kann optional zumindest ein Teil von synthetischem Kunststoff entfernt werden, falls dies gewünscht ist. Beispielsweise kann auf diese Weise der Anteil von synthetischem Kunststoff in dem herzustellenden Formkörper 102 eingestellt bzw. beeinflusst werden.

Nach dem Lösen 68 des Ausgangsstoffs 110 in Lösungsmittel (bevorzugt NMMO) kann die erhaltene Lyocell-Spinnlösung 104 durch eine oder mehrere Spinndüsen gepresst werden, wodurch Fäden bzw. Filamente honigzäher Viskosität entstehen (siehe Block 70, der dieses Spinnen betrifft).

Während und/oder nach dem Fallen dieser Fäden bzw. Filamente werden diese in Wirkverbindung mit einem wässrigen Milieu gebracht und dadurch verdünnt. Die Konzentration des Lösungsmittels 116 der Fäden bzw. Filamente wird dadurch in einem wässrigen Nebel bzw. einem wässrigen Flüssigkeitsbad so weit reduziert, dass die Lyocell-Spinnlösung in eine feste Phase aus Cellulose-Filamenten überführt wird. Anders ausgedrückt kommt es zu einem Präzipitieren, Fällen oder Koagulieren der Cellulose-Filamente, siehe Bezugszeichen 72. Dadurch wird eine Vorform des Formkörpers 102 erhalten.

Das Erzeugen 80 des regenerierten Cellulose und, in Cellulose inkorporiertem, Elastan aufweisenden Formkörpers 102, insbesondere das Lösen 68, das Spinnen 70 und das nachfolgende Ausfällen 72, mittels eines Lyocell-Verfahrens wird also basierend auf einem Ausgangsstoff 110 durchgeführt, der seinerseits Cellulose und Elastan aufweist.

Ferner kann das Verfahren ein Nachbearbeiten 74 der ausgefällten Lyocell-Cellulose zum Erhalten des Formkörpers 102 aus der Vorform des Formkörpers 110 aufweisen. Eine solche Nachbearbeitung kann zum Beispiel ein Trocknen, Imprägnieren und/oder Umformen der erhaltenen Filamente zu dem finalen Formkörper 102 umfassen. Zum Beispiel kann der Formkörper 102 durch das beschriebene Herstellungsverfahren zu Fasern, einer Folie, einem Gewebe, einem Vlies, einer Kugel, einem porösen Schwamm oder Beads verarbeitet werden und dann einer weiteren Nutzung zugeführt werden (vergleiche Bezugszeichen 76).

Mit Vorteil können nach Nutzung des Formkörpers 102 dessen Cellulose und Elastan von neuem wiedergewonnen werden, indem ein weiteres Verfahren entsprechend der Verfahrensschritte zwischen Bezugszeichen 78 und 74 durchgeführt wird (siehe Block 80). Alternativ können die Cellulose, das Elastan und optionaler weiterer synthetischer Kunststoff des Formkörpers 102 in einem anderen Verfahren (siehe weitere Block 80), beispielsweise einem Viskoseverfahren, wiedergewonnen werden. Diese mehrfache Wiederholbarkeit des Recyclings mittels wiederholter Verfahrensstufen wird durch die Erkenntnis ermöglicht, dass eine Verbesserung von Fasereigenschaften, insbesondere der Festigkeit, überraschend gut durch ein Recyceln von Elastan-haltigen Cellulose Ausgangsstoffen ermöglicht ist.

**Figur 2** zeigt eine Apparatur 100 zum Herstellen eines regenerierten cellulosischen Formkörpers 102 mittels eines Lyocell-Verfahrens auf Basis eines Ausgangsstoffs, welcher Cellulose und Elastan aufweist, gemäß einem exemplarischen Ausführungsbeispiel der Erfindung, das bezugnehmend auf Figur 1 beschrieben wurde.

Figur 2 zeigt also eine Apparatur 100 gemäß einem exemplarischen Ausführungsbeispiel der Erfindung zum Herstellen eines Cellulose aufweisenden Formkörpers 102, der zum Beispiel in Form eines Vlieses (Nonwoven), als Faser, Folie, Kugel, Textilgewebe, Schwamm oder in Form von Beads oder Flakes hergestellt werden kann. Gemäß Figur 2 wird der Formkörper 102 direkt aus einer Spinnlösung 104 hergestellt. Letztere wird mittels eines Koagulations-Fluids 106 (insbesondere aus Luftfeuchtigkeit) und/oder eines Koagulations-Bads 191 (beispielsweise ein Wasserbad, das optional tertiäre Aminoxide wie zum Beispiel N-Methylmorpholin-N-oxid (NMMO) aufweist) in Cellulosefasern 108 als Formkörper 102 umgewandelt. Mittels der Apparatur 100 kann ein Lyocell-Verfahren ausgeführt werden. Auf diese Weise können als Formkörper 102 zum Beispiel im Wesentlichen endlose Filamente oder Fasern 108 oder Mischungen im Wesentlichen endloser Filamente und Fasern 108 diskreter Länge hergestellt werden. Eine Mehrzahl von Düsen, die jeweils eine oder mehrere Öffnungen 126 (die auch als Spinnlöcher bezeichnet werden können) haben, sind bereitgestellt, um Lyocell-Spinnlösung 104 auszustoßen.

Wie Figur 2 entnommen werden kann, kann einem Speichertank 114 über eine Dosiereinrichtung 113 ein Cellulose basierter Ausgangsstoff 110 zugeführt werden.

Gemäß einem Ausführungsbeispiel kann ein Wassereintrag in den Cellulose basierten Ausgangsstoff 110 durch ein unten näher beschriebenes Lösungsmittel 116 (insbesondere NMMO) erfolgen. Auch kann der Cellulose basierte Ausgangsstoff 110 selbst bereits eine gewisse Restfeuchte enthalten (trockener Zellstoff zum Beispiel hat häufig eine Restfeuchte von 5 Gewichtsprozent bis 8 Gewichtsprozent). Insbesondere kann gemäß dem beschriebenen Ausführungsbeispiel der Ausgangsstoff 110 ohne Vorbefeuchtung direkt in eine Mischung aus Wasser und Lösungsmittel 116 gegeben werden. Ein in Figur 2 gezeigter optionaler Wasserbehälter 112 kann dann weggelassen werden.

Gemäß einem alternativen Ausführungsbeispiel kann der Cellulose aufweisende Ausgangsstoff 110 zusätzlich angefeuchtet werden, um dadurch feuchte Cellulose bereitzustellen. Zu diesem Zweck kann Wasser aus einem optionalen Wasserbehälter 112 dem Speichertank 114 über die Dosiereinrichtung 113 zugeführt werden. Daher kann die Dosiereinrichtung 113, gesteuert mittels einer Steuereinrichtung 140, dem Speichertank 114 einstellbare relative Mengen von Wasser und Ausgangsstoff 110 zuführen.

Ein geeignetes Lösungsmittel 116, bevorzugt tertiäre Aminoxide wie zum Beispiel N-Methylmorpholin-N-oxid (NMMO), beziehungsweise eine wässrige Mischung des Lösungsmittels 116, zum Beispiel eine 76%ige Lösung von NMMO in Wasser, ist in einem Lösungsmittelbehälter enthalten. Die Konzentration des Lösungsmittels 116 kann in einer Konzentriereinrichtung 118 entweder durch Zugabe von reinem Lösemittel oder Wasser eingestellt werden. Das Lösungsmittel 116 kann dann mit dem Ausgangsstoff 110 mit definierbaren relativen Mengen in einer Mischeinheit 119 gemischt werden. Auch die Mischeinheit 119 kann mittels der Steuereinheit 140 gesteuert werden. Dadurch wird der Cellulose aufweisende Ausgangsstoff 110 in dem konzentrierten Lösungsmittel 116 in einer Löseeinrichtung 120 mit einstellbaren relativen Mengen gelöst, wodurch die Lyocell-Spinnlösung 104 erhalten wird.. Die relativen Konzentrationsbereiche (auch als Spinnfenster bezeichnet) der Komponenten Ausgangsstoff 110, Wasser und Lösungsmittel 116 in der Spinnlösung 104 zur Herstellung von cellulosischen Regeneratformkörpern nach dem Lyocell-Verfahren können, wie einem Fachmann bekannt, geeignet eingestellt werden.

Die Lyocell-Spinnlösung 104 wird einer Fasererzeugungseinrichtung 124 zugeführt (die mit einer Anzahl von Spinnbalken oder Jets 122 ausgebildet sein kann).

Wenn die Lyocell-Spinnlösung 104 durch die Öffnungen 126 der Jets 122 geführt wird, wird sie in eine Mehrzahl von parallelen Fäden aus Lyocell-Spinnlösung 104 aufgeteilt. Die beschriebene Prozessführung transformiert die Lyocell-Spinnlösung 104 in zunehmend lange und dünne Fäden, deren Eigenschaften durch entsprechende Einstellung der Prozessbedingungen, gesteuert durch die Steuereinheit 140, eingestellt werden können. Optional kann ein Gasfluss die Lyocell-Spinnlösung 104 auf ihrem Weg von den Öffnungen 126 zu einer Faseraufnahmeeinheit 132 beschleunigen.

Nachdem die Lyocell-Spinnlösung 104 sich durch die Jets 122 und weiter abwärts bewegt hat, interagieren die langen und dünnen Fäden der Lyocell-Spinlösung 104 mit dem Koagulations-Fluid 106.

Bei der Wechselwirkung mit dem Koagulations-Fluid 106 (zum Beispiel Wasser) wird die Lösungsmittelkonzentration der Lyocell-Spinnlösung 104 reduziert, sodass die Cellulose des Ausgangsstoffs 110 zumindest teilweise als lange und dünne Cellulosefasern 108 (die immer noch Reste von Lösungsmittel und Wasser enthalten können) koaguliert bzw. ausfällt.

Während oder nach der initialen Bildung der individuellen Cellulosefasern 108 aus der extrudierten Lyocell-Spinnlösung 104 werden die Cellulosefasern 108 an der Faseraufnahmeeinheit 132 aufgenommen. Die Cellulosefasern 108 können in das in Figur 2 dargestellte Koagulations-Bad 191 (zum Beispiel ein Wasserbad, optional aufweisend ein Lösungsmittel wie NMMO) eintauchen und können bei Wechselwirkung mit der Flüssigkeit des Koagulations-Bads 191 ihr Ausfällen abschließen. Abhängig von der Prozesseinstellung der Koagulation kann die Cellulose Cellulosefasern 108 bilden (wie gezeigt, wobei die Cellulosefasern 108 einstoffig bzw. integral miteinander verschmolzen ("merging") sein können oder als getrennte Cellulosefasern 108 vorliegen können) oder kann sich an der Faseraufnahmeeinheit 132 eine Folie bzw. ein Film aus Cellulose bilden (nicht in Figur 2 dargestellt).

Die Cellulosefasern 108 werden also aus den Spinndüsen der Jets 122 extrudiert und durch das Spinnbad bzw. Koagulations-Bad 191 (enthaltend zum Beispiel Wasser und NMMO in niedriger Konzentration zur Ausfällung/Koagulation) geführt, dabei werden die Cellulosefasern 108 um eine jeweilige Umlenkrolle 193 im Koagulations-Bad 191 geführt und außerhalb des Koagulations-Bads 191 einer Abzugsgalette 195 zugeführt. Die Abzugsgalette 195 sorgt für Weitertransport und Nachverstreckung der Cellulosefasern 108, um einen gewünschten Titer zu erreichen. Nach der Abzugsgalette 195 wird das Faserbündel aus den Cellulosefasern 108 in einer Wascheinheit 180 gewaschen, gegebenenfalls aviviert und schließlich geschnitten (nicht gezeigt).

Obwohl dies in Figur 2 nicht dargestellt ist, kann Lösungsmittel 116 der Lyocell-Spinnlösung 104, das aus den Cellulosefasern 108 beim Koagulieren und bei einem nachfolgenden Waschen in der Wascheinheit 180 entfernt worden ist, zumindest teilweise zurückgewonnen bzw. recycelt werden und in einem nachfolgenden Zyklus wieder in den Speichertank 114 übergeführt werden.

Während des Transports entlang der Faseraufnahmeeinheit 132 kann der Formkörper 102 (hier in Form der Cellulosefasern 108) mittels der Wascheinheit 180 gewaschen werden, indem Letztere eine Waschflüssigkeit zum Entfernen von Lösungsmittelresten zuführt. Danach kann der Formkörper 102 getrocknet werden.

Der Formkörper 102 kann darüber hinaus einer Nachbehandlung unterzogen werden, siehe die schematisch dargestellte Nachbehandlungseinheit 134. Zum Beispiel kann eine solche Nachbehandlung eine Hydroverschlingung, eine Nadelbehandlung, eine Imprägnierung, eine Dampfbehandlung mit einem unter Druck zugeführten Dampf und/oder ein Kalandrieren, etc., aufweisen.

Die Faseraufnahmeeinheit 132 kann den Formkörper 102 einer Aufwickeleinrichtung 136 zuführen, an welcher der Formkörper 102 aufgewickelt werden kann. Der Formkörper 102 kann dann als Rollgut einer Entität zugeführt werden, die Produkte wie zum Beispiel Wischtücher oder Textilien auf Basis des Formkörpers 102 herstellt.

**Figur 3** zeigt eine mittels eines Lyocell-Verfahrens hergestellte Cellulosefaser 200 im Querschnitt. Die mittels eines Lyocell-Verfahrens hergestellte Cellulosefaser 200 hat eine glatte runde Außenfläche 202 und ist homogen und frei von makroskopischen Löchern mit Cellulosematerial ausgefüllt. Sie kann daher von einem Fachmann eindeutig von mittels eines Viskoseverfahrens hergestellten Cellulosefasern (siehe Bezugszeichen 204 in Figur 4) und von Cellulosefasern aus Baumwollpflanzen (siehe Bezugszeichen 206 in Figur 5) unterschieden werden.

**Figur 4** zeigt eine mittels eines Viskoseverfahrens hergestellte Cellulosefaser 204 im Querschnitt. Die Cellulosefaser 204 ist wolkenförmig und weist entlang ihres äußeren Umfangs eine Mehrzahl von bogenförmigen Strukturen 208 auf.

**Figur 5** zeigt eine natürliche Cellulosefaser 206 aus einer Baumwollpflanze im Querschnitt. Die Cellulosefaser 206 ist nierenförmig und weist im Inneren ein materialfreies Lumen 210 als vollumfänglich umschlossenen Hohlraum auf.

Anhand der signifikanten geometrischen bzw. strukturellen Unterschiede der Fasern gemäß Figur 3 bis Figur 5 ist es einem Fachmann möglich, zum Beispiel unter einem Mikroskop unzweideutig zu ermitteln, ob eine Cellulosefaser mittels des Lyocell-Verfahrens, mittels des Viskoseverfahrens oder natürlich in einer Baumwollpflanze gebildet worden ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Regenerierter cellulosischer Formkörper (102), hergestellt nach einem Lyocell-Verfahren, welcher Elastan aufweist, wobei das Elastan in dem Formkörper (102) inkorporiert ist.

2. Der regenerierte cellulosische Formkörper (102) gemäß Anspruch 1, wobei der regenerierte cellulosische Formkörper (102) zumindest 0,1 % Polyurethan aufweist, und
wobei zumindest 10 % des Polyurethans Elastan zugeordnet sind.

3. Der regenerierte cellulosische Formkörper (102) gemäß Anspruch 1 oder 2, wobei der regenerierte cellulosische Formkörper (102) 0,1 % bis 5 % Elastan aufweist.

4. Der regenerierte cellulosische Formkörper (102) gemäß einem der vorhergehenden Ansprüche, ferner aufweisend
zumindest einen weiteren synthetischen Kunststoff, insbesondere weniger als 2 %, aus der Gruppe, welche besteht aus Polyester, Polyamid, Polyurethan und Polyether.

5. Der regenerierte cellulosische Formkörper (102) gemäß Anspruch 4, wobei zumindest ein Teil des weiteren synthetischen Kunststoffs zumindest eine Kompatibilität aufweist, welche zumindest eine aus der Gruppe ist, welche besteht aus Ester-Kompatibilität, Amid-Kompatibilität und Ether-Kompatibilität.

6. Der regenerierte cellulosische Formkörper (102) gemäß Anspruch 4 oder 5, wobei der weitere synthetische Kunststoff zumindest teilweise in der Cellulose inkorporiert ist.

7. Der regenerierte cellulosische Formkörper (102) gemäß einem der vorhergehenden Ansprüche, wobei der regenerierte cellulosische Formkörper (102) zumindest eines der folgenden Merkmale aufweist:
der regenerierte cellulosische Formkörper (102) ist ausgewählt aus der Gruppe, welche aufweist eine Faser, eine Folie, eine Kugel oder ein Schwamm;
der regenerierte cellulosische Formkörper (102) weist eine Faserdehnbarkeit auf, welche um zumindest 10 %, insbesondere zumindest 20 %, höher ist als die Faserdehnbarkeit einer üblichen Lyocellfaser;
der regenerierte cellulosische Formkörper (102) weist Festigkeitswerte einer üblichen Lyocellfaser auf;
der regenerierte cellulosische Formkörper (102) weist eine reduzierte Tendenz zur Fibrillation im Vergleich zu einer üblichen Lyocellfaser auf.

8. Verfahren zum Herstellen eines regenerierten cellulosischen Formkörpers (102), wobei das Verfahren aufweist:
Bereitstellen (78) eines Ausgangsstoffs (110), welcher Cellulose und Elastan aufweist, insbesondere wobei das Elastan in dem Ausgangsstoff (110) separat von der Cellulose vorliegt,
wobei der Ausgangsstoff (110) ein Festkörper ist; und
Erzeugen (80) des Cellulose aufweisenden Formkörpers (102) mittels eines Lyocell-Verfahrens auf Basis des Ausgangsstoffs (110) derart, dass der regenerierte cellulosische Formkörper (102) zumindest einen Teil des Elastans des Ausgangsstoffs (110) aufweist, wobei der Teil des Elastans des Ausgangsstoffs (110) in dem regenerierten cellulosischen Formkörper (102) inkorporiert ist.

9. Verfahren gemäß Anspruch 8,
wobei der regenerierte cellulosische Formkörper (102) einen Anteil an synthetischem Kunststoff aufweist, welcher zumindest zu 0,1 % aus dem Ausgangsstoff (110) stammt.

10. Verfahren gemäß einem der Ansprüche 8 oder 9,
wobei der Ausgangsstoff (110) ganz oder teilweise Reste aus der Kleidungsherstellung und/oder Altkleider aufweist.

11. Das Verfahren gemäß einem der Ansprüche 8 bis 10, ferner aufweisend:
Lösen (68) des Ausgangsstoffs (110) in einem Lösungsmittel (116) mittels eines Direktlöseverfahrens, insbesondere in N-Methylmorpholin-N-oxid, NMMO, um eine Spinnlösung (104) zu erhalten;
Extrudieren (70) der Spinnlösung (104) durch Spinndüsen, insbesondere bei weniger als 150° C, derart,
dass ein zumindest teilweises Inkorporieren von synthetischem Kunststoff, insbesondere Elastan, in die Cellulose ermöglicht ist.

12. Das Verfahren gemäß einem der Ansprüche 8 bis 11, ferner aufweisend:
Zuführen (64) in die Spinnlösung (104) von zumindest einem Stoff aus der Gruppe, welche besteht aus Cellulosefasern, Fremdmaterialien, Zellstoff, Hemicellulose und Cellulosefasern mit kurzer Kettenlänge.

13. Verfahren gemäß einem der Ansprüche 8 bis 12,
wobei der Ausgangsstoff (110) zumindest einen weiteren synthetischen Kunststoff aus der Gruppe aufweist, welche besteht aus Polyester, Polyamid, Polurethan und Polyether.

14. Verfahren gemäß Anspruch 13, ferner aufweisend:
zumindest teilweises Behalten eines ersten zusätzlichen synthetischen Kunststoffs,
insbesondere einem aus der Gruppe, welche besteht aus Polyester, Polyamid, und Polyether,
von dem Ausgangsstoff (110) zum Erzeugen des regenerierten cellulosischen Formkörpers (102) derart,
dass der erste zusätzliche synthetische Kunststoff im Wesentlichen in dem regenerierten cellulosischen Formkörper (102) beinhaltet ist;
und/oder
Entfernen, insbesondere vollständiges Entfernen, eines zweiten zusätzlichen synthetischen Kunststoffs,
insbesondere einem aus der Gruppe, welche besteht aus Polyester, Polyamid und Polyether,
aus dem Ausgangsstoff derart,
dass der zweite zusätzliche synthetische Kunststoff im Wesentlichen nicht in dem regenerierten cellulosischen Formkörper (102) beinhaltet ist,
insbesondere wobei der erste zusätzliche synthetische Kunststoff von dem zweiten zusätzlichen synthetischen Kunststoff verschieden ist.

15. Das Verfahren gemäß einem der Ansprüche 13 oder 14, ferner aufweisend:
Zuführen (64) von zumindest einem weiteren Ausgangsstoff, welcher Cellulose und zumindest einen synthetischen Kunststoff aufweist,
insbesondere einen synthetischen Kunststoff aus der Gruppe, welche besteht aus Elastan, Polyester, Polyamid, Polyether und Polyurethan,
wobei der Anteil an synthetischem Kunststoff in dem Ausgangsstoff (110) und dem weiteren Ausgangsstoff verschieden ist; und
Erzeugen des regenerierten cellulosischen Formkörpers (102) basierend auf dem Ausgangsstoff (110) und dem weiteren Ausgangsstoff derart, dass der regenerierte cellulosische Formkörper (102) zumindest eine vorbestimmte Eigenschaft aufweist, wobei die vorbestimmte Eigenschaft die Konzentration von Elastan aufweist.

## Claims

1. Regenerated cellulosic molded body (102) manufactured according to a lyocell method, which comprises elastane, wherein the elastane is incorporated in the molded body (102).

2. The regenerated cellulosic molded body (102) according to claim 1, wherein the regenerated cellulosic molded body (102) comprises at least 0.1% polyurethane and wherein at least 10% of the polyurethane is assigned to elastane.

3. The regenerated cellulosic molded body (102) according to claim 1 or 2, wherein the regenerated cellulosic molded body (102) comprises 0.1% to 5% elastane.

4. The regenerated cellulosic molded body (102) according to one of the preceding claims, further comprising at least one further synthetic plastic, in particular less than 2 %, from the group comprising polyester, polyamide, polyurethane and polyether.

5. The regenerated cellulosic molded body (102) according to claim 4, wherein at least a part of the further synthetic plastic comprises at least one compatibility which is at least one from the group consisting of ester compatibility, amide compatibility and ether compatibility.

6. The regenerated cellulosic molded body (102) according to claim 4 or 5, wherein the further synthetic plastic is at least partially incorporated in the cellulose.

7. The regenerated cellulosic molded body (102) according to one of the preceding claims, wherein the regenerated cellulosic molded body (102) comprises at least one of the following features:
the regenerated cellulosic molded body (102) is selected from the group which comprises a fiber, a foil, a sphere or a sponge;
the regenerated cellulosic molded body (102) has a fiber extensibility which is at least 10%, in particular at least 20%, higher than the fiber extensibility of a conventional lyocell fiber;
the regenerated cellulosic molded body (102) has strength values of a conventional lyocell fiber;
the regenerated cellulosic molded body (102) has a reduced tendency to fibrillation compared to a conventional lyocell fiber.

8. Method for manufacturing a regenerated cellulosic molded body (102), wherein the method comprises:
providing (78) a starting material (110), which comprises cellulose and elastane, in particular wherein the elastane is present in the starting material (110) separately from the cellulose, wherein the starting material (110) is a solid body; and
generating (80) the molded body (102) comprising cellulose by means of a lyocell method on the basis of the starting material (110), such that the regenerated cellulosic molded body (102) comprises at least a part of the elastane of the starting material (110), wherein the part of the elastane of the starting material (110) is incorporated in the regenerated cellulosic molded body (102).

9. Method according to claim 8, wherein the regenerated cellulosic molded body (102) comprises a portion of synthetic plastic, which originates at least to the extent of 0.1% from the starting material (110).

10. The method according to claim 8 or 9, wherein the starting material (110) entirely or partially comprises redisues from the manufacture of clothing and/ir clothes.

11. The method according to any of the claims 8 to 10, further comprising:
dissolving (68) the starting material (110) in a solvent (116) by means of a direct dissolving method, in particular in N-methylmorpholine-N-oxide, NMMO, in order to obtain a spinning solution (104);
extruding (70) the spinning solution (104) through spinning nozzles, particularly at less than 150°C, such that an at least partial incorporation of synthetic plastic, in particular elastane, into the cellulose is made possible.

12. The method according to one of claims 8 to 11, further comprising:
feeding (64) into the spinning solution (104) at least one substance from the group consisting of cellulose fibers, foreign materials, pulp, hemicellulose and cellulose fibers with short chain length.

13. Method according to one of claims 8 to 12, wherein the starting material (110) comprises at least one further synthetic plastic from the group consisting of polyester, polyamide, polyurethane and polyether.

14. Method according to claim 13, further comprising:
at least partially retaining a first additional synthetic plastic, in particular one from the group consisting of polyester, polyamide, and polyether, from the starting material (110) for generating the regenerated cellulosic molded body (102), such that the first additional synthetic plastic is substantially included in the regenerated cellulosic molded body (102);
and/or
removing, in particular completely removing, a second additional synthetic plastic, in particular one from the group consisting of polyester, polyamide and polyether, from the starting material, such that the second additional synthetic plastic is substantially not included in the regenerated cellulosic molded body (102), in particular wherein the first additional synthetic plastic is different from the second additional synthetic plastic.

15. The method according to one of claims 13 or 14, further comprising:
feeding (64) at least one further starting material, which comprises cellulose and at least one synthetic plastic, in particular one synthetic plastic from the group consisting of elastane, polyester, polyamide, polyether and polyurethane, wherein the portion of synthetic plastic in the starting material (110) and the further starting material is different; and
generating the regenerated cellulosic molded body (102) based on the starting material (110) and the further starting material, such that the regenerated cellulosic molded body (102) has at least one predetermined property.

## Revendications

1. Corps moulé cellulosique régénéré (102) fabriqué selon un procédé Lyocell contenant de l'élasthanne dans lequel l'élasthanne est incorporé dans le corps moulé (102).

2. Corps moulé cellulosique régénéré (102) selon la revendication 1, dans lequel le corps moulé cellulosique régénéré (102) contient au moins 0,1 % de polyuréthane, et dans lequel au moins 10 % du polyuréthane sont associés à de l'élasthanne.

3. Corps moulé cellulosique régénéré (102) selon la revendication 1 ou 2, dans lequel le corps moulé cellulosique régénéré (102) contient entre 0,1 % et 5 % d'élasthanne.

4. Corps moulé cellulosique régénéré (102) selon l'une quelconque des revendications précédentes, dans lequel la matière étrangère contient au moins une matière plastique synthétique supplémentaire, en particulier moins que 2 %, issue du groupe constitué de polyester, polyamide, polyuréthane et polyéther.

5. Corps moulé cellulosique régénéré (102) selon la revendication 4, dans lequel au moins une partie de la matière plastique synthétique supplémentaire présente au moins une compatibilité, qui est au moins une issue du groupe constitué de compatibilité ester, compatibilité amide et compatibilité éther.

6. Corps moulé cellulosique régénéré (102) selon la revendication 4 ou 5, dans lequel la matière plastique synthétique supplémentaire est au moins partiellement incorporée dans la cellulose.

7. Corps moulé cellulosique régénéré (102) selon l'une quelconque des revendications précédentes, dans lequel le corps moulé cellulosique régénéré (102) présente au moins une des caractéristiques ci-dessous :
le corps moulé cellulosique régénéré (102) est choisi dans le groupe constitué de fibre, film, bille ou éponge ;
le corps moulé cellulosique régénéré (102) présente une extensibilité de fibre supérieure d'au moins 10%, en particulier d'au moins 20%, à l'extensibilité de fibre d'une fibre Lyocell habituelle ;
le corps moulé cellulosique régénéré (102) présente les valeurs de résistance d'une fibre Lyocell habituelle ;
le corps moulé cellulosique régénéré (102) présente une tendance réduite à la fibrillation par rapport à une fibre Lyocell habituelle.

8. Procédé de fabrication d'un corps moulé cellulosique régénéré (102), dans lequel le procédé comprend les étapes consistant à :
fournir (78) une matière première (110) contenant de la cellulose et de l'élasthanne, en particulier dans lequel l'élasthanne est présent dans la matière première (110) séparément de la cellulose, dans lequel la matière première (110) est une matière solide, et
produire (80) le corps moulé (102) contenant de la cellulose au moyen d'un procédé Lyocell à partir de la matière première (110) de telle manière que le corps moulé cellulosique régénéré (102) contient au moins une partie de l'élasthanne de la matière première (110), dans lequel ladite partie de l'élasthanne de la matière première (110) est incorporée dans le corps moulé cellulosique régénéré (102).

9. Procédé selon la revendication 8, dans lequel le corps de forme cellulosique régénéré (102) contient une proportion de matière plastique synthétique qui provient de la matière première (110) pour au moins 0,1 %.

10. Procédé selon la revendication 8 ou 9, dans lequel la matière première (110) contient en totalité ou en partie des résidus de la fabrication de vêtements et/ou de vêtements usagés.

11. Procédé selon l'une quelconque des revendications 8 à 10, présentant en outre les étapes consistant à :
dissoudre (68) la matière première (110) dans un solvant (116) au moyen d'un procédé de dissolution directe, en particulier dans du N-méthylmorpholine-N-oxyde, NMMO, afin d'obtenir une solution de filage (104) ;
extruder (70) la solution de filage (104) à travers des filières, en particulier à moins de 150°C, de telle manière que il est possible d'incorporer au moins partiellement de la matière plastique synthétique, en particulier de l'élasthanne, dans la cellulose.

12. Procédé selon l'une quelconque des revendications 8 à 11, présentant en outre les étapes consistant à :
introduire (64) dans la solution de filage (104) au moins une matière issue du groupe constitué de fibres de cellulose, matières étrangères, cellulose, hémicellulose et fibres de cellulose à courte longueur de chaîne.

13. Procédé selon l'une quelconque des revendications 8 à 12, dans lequel la matière première (110) comprend au moins une matière plastique synthétique supplémentaire issue du groupe constitué de polyester, polyamide, polyuréthane et polyéther.

14. Procédé selon la revendication 13, présentant en outre les étapes consistant à:
au moins partiellement conserver une première matière plastique synthétique supplémentaire, en particulier une choisie dans le groupe constitué de polyester, polyamide et polyéther, de la matière première (110) afin de produire le corps moulé cellulosique régénéré (102) de telle manière que la première matière plastique synthétique supplémentaire est essentiellement contenue dans le corps moulé cellulosique régénéré (102) ;
et/ou
éliminer, en particulier éliminer complètement, une deuxième matière plastique synthétique supplémentaire, en particulier une issue du groupe constitué de polyester, polyamide et polyéther, hors de la matière première de telle manière que la deuxième matière plastique synthétique supplémentaire n'est essentiellement pas contenue dans le corps moulé cellulosique régénéré (102), en particulier dans lequel la première matière plastique synthétique supplémentaire est différente de la deuxième matière plastique synthétique supplémentaire.

15. Procédé (100) selon l'une quelconque des revendications 13 à 14, présentant en outre les étapes consistant à :
introduire (64) au moins une matière première supplémentaire contenant de la cellulose et au moins une matière synthétique, en particulier une matière plastique synthétique issue du groupe constitué d'élasthanne, polyester, polyamide, polyéther et polyuréthane, dans lequel la proportion de matière plastique synthétique dans la matière première (110) et la matière première supplémentaire est différente ; et
produire le corps moulé cellulosique régénéré (102) à partir de la matière première (110) et de la matière première supplémentaire de telle manière que le corps moulé cellulosique régénéré (102) présente au moins une propriété prédéterminée.
